(19) Europäisches Patentamt

European Patent Office

Office européen des brevets

(11) **EP 0 978 784 A1**

(12) **EUROPEAN PATENT APPLICATION**

(43) Date of publication:
**09.02.2000 Bulletin 2000/06**

(51) Int. Cl.[7]: **G06F 11/00**

(21) Application number: **98114636.8**

(22) Date of filing: **04.08.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **MOTOROLA, INC.**
**Schaumburg, IL 60196 (US)**

(72) Inventors:
• **Sukonik, Vitaly**
  **Hadera 39236 (IL)**
• **Ben-Efraim, Arie**
  **Herzlia 40500 (IL)**
• **Grobman, Alexander**
  **Netanya 41833 (IL)**

(74) Representative:
**Richardt, Markus Albert**
**Motorola GmbH,**
**Intellectual Property Dept.,**
**Hagenauerstrasse 47**
**65203 Wiesbaden (DE)**

(54) **Method for coding computer programs and method for debugging coded computer programs**

(57) The present invention describes a method according for coding instructions of a computer program comprising steps of dividing each of the instructions into at least two parts, coding each of the parts according to a coding algorithm, determining a shortest length of a sum of parts belonging to the same instruction, reserving at least one entry for a code with the length for coding of at least one illegal instruction, coding each of the uncoded parts again, according to the coding algorithm while reserving at least one entry for the code having the length coding the illegal instruction and debugging of so coded computer programs by setting up breakpoints modifying instructions at which breakpoints are to be set up.

This modification makes the compressed instruction with a bit combination unimplemented and therefore illegal

Method 100

| | |
|---|---|
| dividing each of the instructions into at least two parts | 110 |
| coding each of the parts according to a coding algorithm | 120 |
| determining a shortest length of a sum of parts belonging to the same instruction | 130 |
| reserving at least one entry for a code with the length determined above for coding of at least one illegal instruction; | 140 |
| coding each of the parts according to the coding algorithm while reserving at least one code of the length for one or more illegal instruction(s) | 150 |

FIG. 2

EP 0 978 784 A1

## Description

Field of the Invention

This invention relates to the process of coding computer programs and debugging of coded computer programs.

Background of the Invention

The process of removing errors in a computer program (debugging) is well known to persons skilled in the art and is described, for example, in "How debuggers Work", Jonathan B. Rosenberg, especially Chapter 6, pages 107-118, Wiley Computer Publishing, John Wiley & Sons, Inc., New York 1996 (ISBN 0-471-14966-7). A major part of the debugging process is to detect, locate and possibly correct logical and syntax errors in a computer program and to inspect data at certain points during program execution. This is usually done by using debugging program packages which monitor the execution of the target program in which logical and syntax errors are searched for. At certain predetermined locations (breakpoints) in the target program, the control is transferred to the debugger and the execution of the program may be halted to allow the user to examine program status, the contents of variables, etc., or only some values may be recorded, without necessarily halting the program.

The first step of debugging is to load a debugging program into the computer memory along with the target program.

Execution of the target program is started in the debugging monitor which initializes computer registers and memories, establishes breakpoints in the target program at selected memory locations, and finally transfers control back to the target program. The program is executed until a break point has been encountered.

The implementation of the breakpoints is done by replacing an instruction in a program with a special instruction (also called a trap-instruction) or sometimes with illegal OPCODEs. An example of replacing the instruction with an illegal OPCODE instruction can be found in the Reference Manual, for the M68HC11 family of microcontroller units, issued by Motorola Inc. 1991 Chapter 5.4.2 Illegal OPCODE Fetch, page 5-21.

As there are many more possible combinations for OPCODES than are actually used, there are some combinations of OPCODES which are not assigned to any instruction. These so called illegal OPCODES are non-effective when executed by the processor, so that when these OPCODES are met, further execution of the program is interrupted and a special routine is executed to determine what kind of action should be taken.

Problems in the course of debugging may appear, if a computer program is encoded in order to be compressed, and in such case the program has to be decompressed before execution. Methods and devices for coding and decoding are well known to persons skilled in the art. The following reference gives an introduction to coding and decoding, in general: Bernard Sklar: "DIGITAL COMMUNICATIONS Fundamentals and Applications", publishes by Prentice Hall, Englewood Cliffs 1998, ISBN 0-13-211939-0, especially chapter 11.6 "Source Coding" on pages 595-667. Huffman coding, also used in describing the invention, is assumed only for the purposes of convenience and is not intended to be limiting.

In the case of a compressed program it is difficult to insert a special breakpoint instruction at a given location without effecting the rest of the program.

The present invention seeks to provide methods which code computer programs as well as methods to debug such programs avoiding or minimizing problems encountered in the prior art.

Brief description of the Drawings

FIG. 1 shows a sequence of instructions of a target program in which one instruction has been replaced with a trap instruction;

FIG. 2 shows a flowchart diagram illustrating the method of the present invention for coding computer programs;

FIG. 3 shows a schematic representation of the structure and structural changes that take place during coding according to the method described in FIG. 2;

FIG. 4 shows a flowchart diagram illustrating the method of the present invention for debugging computer programs coded according to the method described in FIG. 2.

Detailed embodiment of the Invention

In the case of compressed programs, it is important that a desired instruction or instructions are replaced by a trappable one(s), i.e. either by a trap instruction or by an instruction which would cause an exception routine, e.g. an illegal OPCODE, without effecting the rest of the target program. This is very difficult for programs compressed by variable length coding, e.g. Huffman coding, when using trap-instructions, as the size of the compressed trap-instruction has to be shorter or at least equal to the instruction being replaced. In the compressed programs it is usually so that the shortest code would have an instructions which is used most often in order to obtain the most efficient coding (see Bernard Sklar: "DIGITAL COMMUNICATIONS Fundamentals and Applications", publishes by Prentice Hall, Englewood Cliffs 1998, ISBN 0-13-211939-0, chapter 11.6.2 "Source Coding", page 657). Therefore, if a trap instruction is to be coded, it must have the shortest length in the coded form. As Huffman coding is a variable length coding, and in order to achieve the best results, an instruction that occurs the most often would have a length of 1 bit in the coded form. However, in order to debug the program this bit would have to be assigned to the trap instruction, which is not used very often, reducing the efficiency of coding considerably, as much as by 50%.

The importance why a trap instruction must be shorter or equal the replaced instruction can be represented in the following way.

The following abbreviations will be used in describing the invention:

I represents a non-coded instruction and I' a coded instruction;
the sign ' will be used for coded forms throughout the text;
N is the number of bits; and.
(o) represents an original instruction, which is or should be replaced with a trappable one which is represented by (t).

First an uncoded set of instruction of variable length will be discussed. For these instruction a condition must be met:

$$N (o) \geq N (t) \qquad (1)$$

N (o) represents the number of bits of an original instruction I(o) which are replaced by a number of bits N (t) of the trappable instruction I(t). Note that N(o) does not have to be the length of the instruction as a whole, but can also represent only one part of a instruction. In every case the number of replacing bits must be smaller or equal to the number of replaced bits. A set of instruction with the same length will not be discussed as this condition is always met.

Therefore the (1) must be fulfilled, if overlapping of the next instruction is to be avoided.

In the case that instruction are compressed by variable length coding it is the condition

$$N'(o) \geq N'(t) \qquad (2)$$

that must be fulfilled to allow debugging.

The importance that all instructions remain intact when an instruction has been replaced by a trappable is illustrated by the following example.

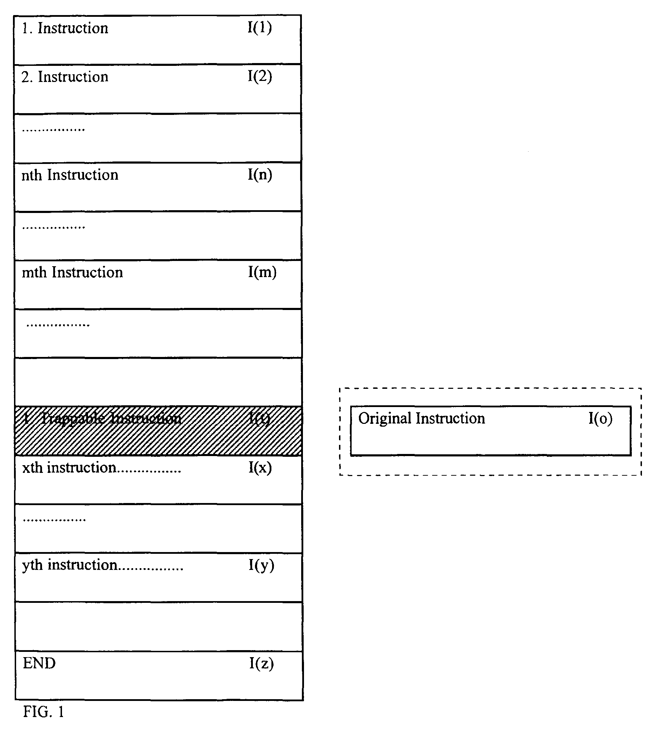

FIG. 1 shows a sequence of instructions of the target program with instructions I(i) (i=1,2,...,n,....,m,......,t,..,x,y,...z) where I(1) represent the first instruction, I(2) the second one, I(t) represent a trap instruction, I(n), I(m) are instructions positioned before I(t), I(x), I(y) are instructions positioned after I(t), and I(z) is the last instruction in the target program. I(o) represents the original instruction that is replaced by I(t). I(o) is normally stored in the debugger memory and may or may not replace the trap instruction some time, during the execution of the program.

Suppose the program is executed in such a way that after executing I(n) the program jumps to I(x), executes further instructions and reaches I(y) before jumping back to I(m). After executing a number of instructions a trap-instruction I(t) is encountered. In such case the replacement of the trap-instruction requires that all subsequent instructions be in their original place. Suppose further, that the trap-instruction I(t) is longer than the original instruction I(o)which it replaced, and that I(x) instruction is immediately after I(t), what would have as a consequence that the xth instruction would be partially overlap, which makes correct execution of the program impossible. In order not to overlap the I(x) all instructions subsequent to I(t) must be moved, which would change their addresses making jumps almost impossible to perform. To ensure the correct execution of the program a trap instruction should preferably be shorter or at least have the same length as the instruction which it replaces in order to enable a correct execution of the program.

According to the prior art, the requirement for a trap-instruction to be shorter than or equal to the instruction being replaced can only be satisfied by paying the penalty of having encoded trap instructions with the shortest length of all encoded instructions. In this case efficiency of coding has to be reduced as the shortest length will have an instruction which is not used very often, and this increases memory needed to store the program, as the most often used instruction must be longer than necessary.

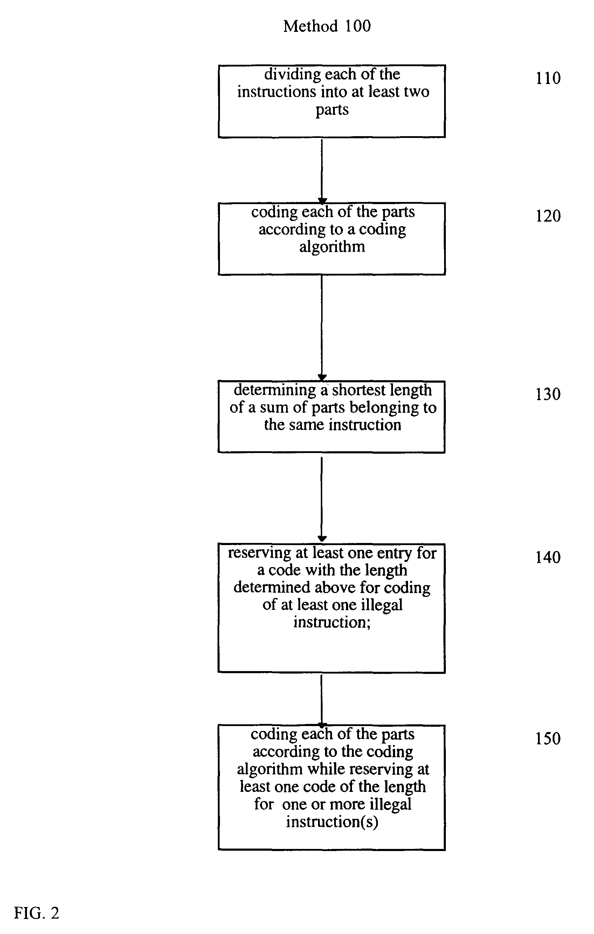

A method shown in FIG. 2 enables coding of a computer program, which can be debugged without deteriorating much the efficiancy of coding. Even though this method enables the debugging, it should be emphasized that there are some other cases in which it is desirable to exchange an original instruction with another one, in order to force an exception routine, so that the coding is not limited for purposes of debugging.

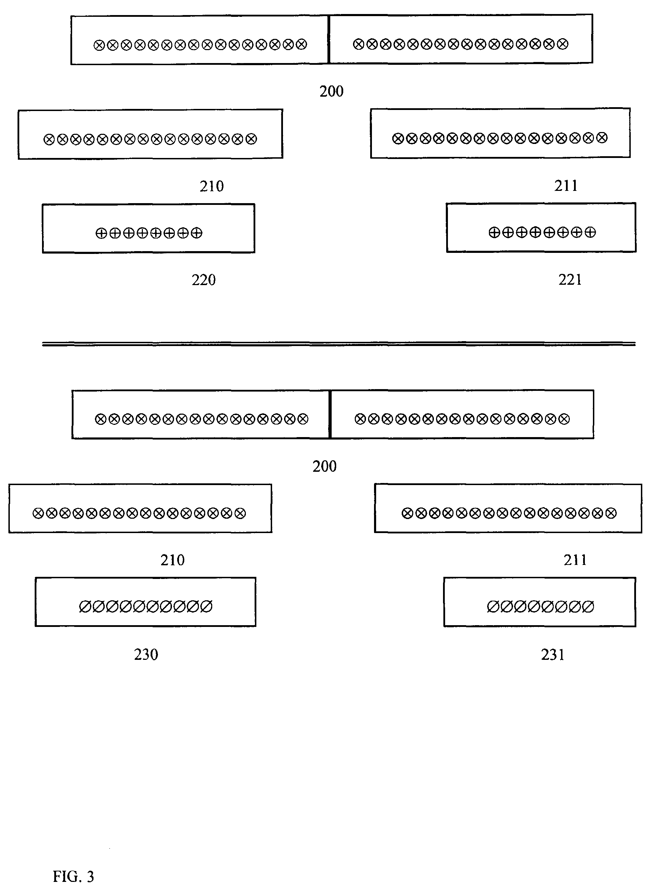

The present invention does not code an instruction in one step, but instead the instruction is separated into at least two parts and then those two parts are coded. The step 110 of FIG. 2 shows that each instruction of the computer program is dived into at least two parts. Those parts could have the same length, but this is not necessary for the invention. FIG. 3 shows changes that take place with the data structure, when steps described in FIG. 2 are performed. By way of example and not intended to be limited an 32-bit instruction 200(i) is shown, which is separated into to equal parts 210(i) and 211(i). It is sometimes desirable to have parts of the same length, whereas there might be some cases where two parts of unequal lengths are more desirable.

According to the next step 120 of FIG. 2 each part has to be coded. Even though it is possible to code both parts 210(i) and 21(i) independently, in order to increase the efficiency of coding, the second part 211(i) dependent of the first one 210(i).

In the next step 130 is the lowest sum of bits of all the corresponding parts Min{N[210(i)+211(i)]}, i.e. parts belonging to the same instruction 200(i) determined. This is the shortest length that an instruction in the coded form may have.

At least one entry with this length is then reserved according to step 140 for one OPCODE or for a class of illegal OPCODES in a coded form.

The uncoded program is then coded as described in the step 150 in the same way as above, i.e. the instructions are divided into at least two parts with equal or unequal length and ten coded, however at least one entry for a code of a length determined in the step 130 is kept empty, i.e. is not assigned to any of the instructions in the program.

When an instruction is coded in such a way it is possible to use illegal OPCODES for debugging purposes without having to pay the price of decreasing the efficiency of coding very much. The coding of one block may or may not be dependent on the coding of other ones.

For persons skilled in the art also know that there are different possibilities to code an instruction depending on the needs and performance of the system. Sometimes, for example, the compression of the processor instructions cannot be done efficiently with one dictionary for the whole instruction set. So, a coding method can be used in which every instruction is partitioned, so that a plurality of encoded instruction blocks is obtained. Accordingly, encoded instruction blocks can be, for example, put together and decoded as a whole, or each block can be decoded separately.

When two blocks are coded independently, they must also be decoded at the same time. Especially in this case it is very suitable to exchange those two blocks with the first block of the coded trap instruction, or an illegal OPCODE, making the instruction unimplemented, without deteriorating the efficiency of coding very much.

FIG. 3 shows, for example, what occurs to the data structure by performing the steps shown in FIG. 2.

The symbols used in the FIG. 3. represent:

the symbol "⊗" represents bits of an uncoded instruction;
the symbol "⊕" represents bits of the coded instruction, after first coding according to the step 120;
the symbol "Ø" represents bits of the coded instruction, after the repeated coding according to the step 140, i.e. while keeping at least one entry empty for a code with the length determined in the step 130.

The first row in FIG 3. shows uncoded 32-bits instruction 200(i) which is partitioned then into two instruction portions 210(i) and 221(i) in accordance to the step 110.

After performing the step 120, 210(i) and 211(i) become coded into 220(i) and 221(i), whereby 221(i) can be coded dependently from 220(i).

After determining the lowest sum of the number of bits of MinN{[220(i)+221(i)]} of the corresponding parts as described by FIG. 2, the whole instruction set is coded again, keeping at least one entry in the coding dictionary empty for a code having the smallest sum as determined in the step 130. In such a way 230(i) and 231(i) coded instruction parts are obtained.

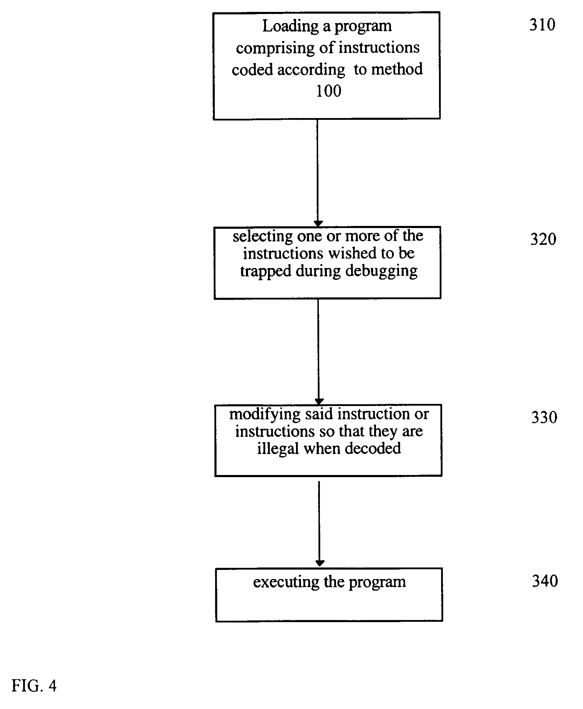

As shown in FIG. 4. the method for debugging a program coded according to the present invention according to the present invention comprises a step 310 of loading a program which comprises coded instructions, determining step 320 to select the one or more instructions at which breakpoints are to be set up, modifying step 330, to modify instructions at which breakpoints are to be set up in order to make them trappable, and execution step 340, which starts executing the program.

As a matter of fact the debugging shown in FIG. 4 is very much similar to debugging used in the prior art for non-coded programs. However, such it was either impossible to perform debugging in such a way as illegal OPCODEs or trap-instruction did not have the shortest code, or a price of considerable deterioration of coding efficiency had to be paid.

The present invention allows debugging, shown in FIG. 4 when program are coded according to the method of the present invention.

It is according to the present invention also possible to modify the instruction in an executed data stream. In this case the program would start to be executed and the instructions at which breakpoints are to be set would be modified during the execution of the program, so that the step 340 would take place before the step 330.

The modifying step 330 can mean exchanging only few bits of an instruction at which the breakpoint is to be set or replacing the information as a whole with a coded trappable instruction. In any case the result would be that the modified instruction would be recognized and the further execution of the program stopped if the modified instruction represents a conditional breakpoint.

As the coding of programs according to the present invention always leave an entry in the coding dictionary for a code with the shortest length it is possible to insert trappable coded instructions at any point of the program. In such a way it is possible to perform debugging in more or less the same way as it is done with uncoded programs with instructions of a variable length.

It is also possible that an illegal instruction in fact the first part of the trap instruction is. However, any instruction causing exception routine could be used for the purposes of the invention. In this case the empty entry in the coding dictionary will be used to code the first part of the trap instruction.

It is possible that only the first part of the trap instruction 230(t) replaces both parts of any coded instruction 230(o) and 231(o). In this case the trap instruction would just be an illegal OPCODE causing an exception routine, so that the breakpoint can be recognized. When this is done, the trap-instruction does not to have to have the shortest length, but can still perform the function to set a breakpoint

Not intending to be limited and only by way of example, the debugger could be constructed in such a way so that in the case that the OPCODE instruction in the encoded form is shorter than the instruction being replaced, that the missing bits are filled in by the debugger.

Persons skilled in the art will know that breakpoints determined by illegal OPCODES can be conditional and unconditional in nature. For example, after encountering an illegal OPCODE the control is transferred to the debugger according to which the execution of the target program is stopped either immediately or, in the case the breakpoint requires a condition, when the condition has been satisfied. Further execution of the program is done in such a way that the debugger replaces the trapped instruction with the original one and transfers the control back to the target program.

A method for detection of illegal OPCODES is well known in the prior art and can be, for example found in US-Patent No. 5 040 178. The method how to continue the execution of the program after a break point has been met is known to persons skilled in the art and can be found, for example in US-Patent No. 5 680 620.

The present invention also has an advantage in comparison to the prior art for the systems having more than one encoded data stream. It is possible for example that every instruction is divide first into two data streams. Then, instruction portions, belonging to one data stream are then divided and then coded according to the present invention. everything said for an instruction as a whole, holds in this case for instruction portions, which belong to one data stream. In such a case portions of instructions contained in each data stream are divided into parts which can be coded according to the present invention.

According to the present invention a modification of the instruction to be replaced by a trappable one in only one data stream makes the whole compressed modified instruction trappable, so that an entry with the shortest length in only one data stream has to be kept empty in order to allow debugging.

Another advantage of the invention is that it is also possible to insert an illegal OPCODE into an executable code stream, instead of replacing instructions at which breakpoints have been set, before the execution of the target program.

Persons skilled in the art will know that method described here can also be used for other purposes as debugging of compressed programs, namely always when it is desired to perform an exception routine or any other routine normally not foreseen in the computer program itself.

While the invention has been described in terms of particular structures and methods, those skilled in the art will understand based on the description herein that it is not limited merely to such examples and that the full scope of invention is properly determined by the claims that follow.

**Claims**

1. A method for coding instructions of a computer program comprising the steps of:

   - dividing each of the instructions into at least two parts;
   - coding each of the parts according to a coding algorithm;
   - determining a shortest length of a sum of parts belonging to the same instruction;
   - reserving at least one entry for a code with the length for coding of at least one illegal instruction; and
   - coding each of the uncoded parts again, according to the coding algorithm while reserving the at least one entry for the code having the length and coding the illegal instruction.

2. The method according to claim 1, wherein the illegal instruction or instructions are determined by a first part of a trap instruction.

3. The method according to any of the preceding claims, characterized in that the coding is performed using Huffman coding.

4. The method according to any of the preceding claims, wherein the instructions are partitioned into at least two data streams, before the step of dividing into at least two parts.

5. A method for debugging a computer program, the computer program having instructions being coded according to a method of any of the preceding claims, comprising the following steps:

   - loading the program;
   - selecting one or more of the instructions which are to be trapped during debugging;
   - modifying the one or more selected instructions so that they become illegal when decoded; and
   - executing the program.

**6.** A method for debugging a computer program, the computer program having instructions being coded according to a method of claims 3 or 4,

- loading the program;
- selecting one or more of the instructions which are to be trapped during debugging;
- modifying the one or more selected instructions in only one data stream so that they become illegal when decoded; and
- executing the program.

**7.** The method according to claims 5 or 6, further comprising the step of setting a conditional breakpoint.

**8.** The method according to claims 5 or 6, further comprising the step of setting a non-conditional breakpoint.

**9.** The method according to any of the claims 5 to 8, comprising the step of filling out a bit-difference by debugger, in case the length of the trappable instruction is shorter than the length of the instruction replacing it.

**10.** A computer readable medium having a program stored thereon, the program being coded in accordance wit the method of any of claims 1 to 4.

**11.** A general prupose computer being programmed to carry out a method of anyone of claims 1 to 9.

**12.** A general prupose computer being programmed with a program, the program being coded in accordance with the method of any of claims 1 to 4.

| | |
|---|---|
| 1. Instruction | I(1) |
| 2. Instruction | I(2) |
| ................ | |
| nth Instruction | I(n) |
| ................ | |
| mth Instruction | I(m) |
| ................ | |
| | |
| ///1. Trappable Instruction/// | ///I(t)/// |
| xth instruction................ | I(x) |
| ................ | |
| yth instruction................ | I(y) |
| | |
| END | I(z) |

| | |
|---|---|
| Original Instruction | I(o) |

FIG. 1

Method 100

| dividing each of the instructions into at least two parts | 110 |

coding each of the parts according to a coding algorithm — 120

determining a shortest length of a sum of parts belonging to the same instruction — 130

reserving at least one entry for a code with the length determined above for coding of at least one illegal instruction; — 140

coding each of the parts according to the coding algorithm while reserving at least one code of the length for one or more illegal instruction(s) — 150

FIG. 2

⊗⊗⊗⊗⊗⊗⊗⊗⊗⊗⊗⊗⊗ ⊗⊗⊗⊗⊗⊗⊗⊗⊗⊗⊗⊗⊗

200

⊗⊗⊗⊗⊗⊗⊗⊗⊗⊗⊗⊗⊗ ⊗⊗⊗⊗⊗⊗⊗⊗⊗⊗⊗⊗⊗

210 211

⊕⊕⊕⊕⊕⊕⊕ ⊕⊕⊕⊕⊕⊕⊕

220 221

⊗⊗⊗⊗⊗⊗⊗⊗⊗⊗⊗⊗⊗ ⊗⊗⊗⊗⊗⊗⊗⊗⊗⊗⊗⊗⊗

200

⊗⊗⊗⊗⊗⊗⊗⊗⊗⊗⊗⊗⊗ ⊗⊗⊗⊗⊗⊗⊗⊗⊗⊗⊗⊗

210 211

ØØØØØØØØ ØØØØØØØ

230 231

FIG. 3

```
┌─────────────────────────┐
│   Loading a program     │      310
│ comprising of instructions │
│ coded according to method │
│          100            │
└─────────────────────────┘
            │
            ▼
┌─────────────────────────┐
│ selecting one or more of the │   320
│   instructions wished to be  │
│   trapped during debugging   │
└─────────────────────────┘
            │
            ▼
┌─────────────────────────┐
│ modifying said instruction or │  330
│  instructions so that they are │
│     illegal when decoded       │
└─────────────────────────┘
            │
            ▼
┌─────────────────────────┐
│   executing the program   │    340
└─────────────────────────┘
```

FIG. 4

**European Patent Office**

## EUROPEAN SEARCH REPORT

Application Number

EP 98 11 4636

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | MARKUS HÄBEL ET AL.: "Fehlerfreiheit vorausgesetzt" ELEKTRONIK., vol. 39, no. 26, 21 December 1990, pages 60-63, XP000177695 MUNCHEN DE * page 62, right-hand column, line 19 - line 26 * | 1-9 | G06F11/00 |
| A | CHARLES H SMALL: "Debuggers help you perfect high-level and real-time code" EDN ELECTRICAL DESIGN NEWS., vol. 32, no. 25, December 1987, pages 153-164, XP002096413 NEWTON, MASSACHUSETTS US * page 176, left-hand column, line 3 - right-hand column, line 19 * | 8 | |
| | | | TECHNICAL FIELDS SEARCHED (Int.Cl.6) G06F |

The present search report has been drawn up for all claims

| Place of search | Date of completion of the search | Examiner |
|---|---|---|
| THE HAGUE | 12 March 1999 | Corremans, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)